# EUROPEAN PATENT SPECIFICATION

(11) **EP 3 550 665 B1**
(45) Date of publication and mention of the grant of the patent: **13.10.2021**
(21) Application number: 18207910.3
(22) Date of filing: 22.11.2018
(51) Int. Cl.: H01Q 1/12, H01Q 1/32

(54) **ROOF PANEL FASTENING DEVICE FOR VEHICLE ANTENNA AND VEHICLE ANTENNA APPARATUS**
DACHPLATTENBEFESTIGUNGSVORRICHTUNG FÜR FAHRZEUGANTENNE UND FAHRZEUGANTENNENVORRICHTUNG
DISPOSITIF DE FIXATION DE PANNEAU DE TOIT POUR ANTENNE DE VÉHICULE ET APPAREIL D'ANTENNE DE VÉHICULE

(30) Priority: 06.04.2018 KR 20180040379
(43) Date of publication of application: 09.10.2019
(73) Proprietor: Winnercom Co., Ltd., Hwaseong-si 18334 (KR)
(72) Inventor: KANG, GI Cho, 14070 Anyang-si (KR); JO, Hyun Seung, 14038 Anyang-si (KR); PARK, Tae Byung, 13922 Anyang-si (KR); JOUNG, Soon Bag, 47902 Busan (KR)
(74) Representative: Stolmár & Partner Patentanwälte PartG mbB

(56) References cited:
- EP-A1- 3 171 454
- CN-A- 107 196 036
- US-A1- 2006 214 860

## Description

### TECHNICAL FIELD

The present invention relates to a roof panel fastening device for vehicle antennas and a vehicle antenna apparatus having the same, and more particularly, to a roof panel fastening device for vehicle antennas, which is capable of robustly and stably fastening a vehicle antenna while preventing unfastening and loosening phenomena and maintaining watertightness when mounting the vehicle antenna to a roof panel, and a vehicle antenna apparatus.

### BACKGROUND ART

In general, the vehicle antenna used as an antenna for a vehicle is installed on a roof panel constituting an upper portion of the vehicle.

In a typical roof panel fastening device for a vehicle antenna, an antenna is fastened by using a nut having a tapped hole therein.

However, since fastening methods according to related arts require a separate tapping process in a bracket base for supporting a vehicle antenna and a nut, these methods have problems such as complicated processes and increased manufacturing costs.

Furthermore, the roof panel fastening device for the vehicle antenna according to the related art has problems in that not only an unfastening phenomenon occurs due to vibration of the roof panel when a long time has elapsed after fastening, but also due to the unfastening phenomenon, a loosening phenomenon occurs in a coupling portion of the vehicle antenna fastened to the roof panel.

Accordingly, to solve the above problems, the applicant of the present invention proposed and filed, as illustrated in FIG. 1, Korean Patent Application No. 10-2017-0063818 titled "Roof fastening device for vehicle shark fin antennas" on May 24, 2017.

In a roof fastening device according to the related art, in order to be coupled to a roof, a base plate 10 is fastened by a fastening bolt 50 while a leaf spring 40 is inserted into a mounting bracket 30. That is, the leaf spring 40 is a steel plate having a pressed structure, has notched portions 45 which is folded when attaching a vehicle shark fin antenna, and is inserted into a leaf spring guide hole 35 of the mounting bracket 35.

However, the above related art has a problem in that when disassembling the antenna for various works after assembling the vehicle shark fin antenna, the leaf spring 40, which is a pressed structure, lacks in elastic recovering force, and thus, the notched portion 45 is not recovered to the original state thereof, and when reassembling the antenna, a loosening phenomenon and the like occur due to insufficient elastic force.

In addition, the above related art has a problem in that when fastening the vehicle antenna to a roof panel, an O-ring is inserted between the roof panel and the antenna in order to maintain watertightness, but due to the flexibility of the O-ring at the time of component assembly, water often penetrates into the antenna.

Thus, a practical and applicable technique is being strongly required such that the fastening structure between the antenna and the roof panel can be simplified, the vehicle antenna can be stably fastened to the roof panel while preventing unfastening and loosening phenomena, and watertightness can be maintained.

### [Prior art document]

### [Patent document]

(Patent document 0001) Korean Patent Laid-openPublication No. 10-1997-0045791 (26 July, 1997)

CN 107 196 036 A discloses an installation fastening structure of a vehicle overhead antenna. The installation fastening structure is used for installing the antenna in an installation hole of a vehicle metal sheet, and comprises a snap joint, a threaded support gasket, an antenna base, a catch, and a bolt, wherein the initially assembled installation fastening structure is inserted along the installation hole of the vehicle metal sheet, the bolt is turned to drive the threaded support gasket to downward move; when a pushing part of the threaded support gasket pushes support legs at two sides of the catch to outwardly extend till to get rid of the limitation of a connecting end surface, the catch upwardly moves until the catch completely fits the connecting end surface and the support legs completely contact with the vehicle metal shell.

EP 3 171 454 A1 discloses a coil element that is configured by forming a winding around a resin-made bobbin. A guide groove which is a path of the winding, and a plurality of projections which are along the path of the winding are disposed on the outer circumferential surface of the winding barrel of the bobbin. The guide groove spirally extends around the outer circumferential surface of the winding barrel. The projections are disposed in plural numbers in each of a plurality of circumferential positions on the outer circumferential surface of the winding barrel. A winding end portion of the winding is drawn out in the axial direction while being hooked to an arbitrary one of the projections, and electrically connected to an upper terminal.

US 2006/214860 A1 discloses a vehicle roof antenna mounting assembly comprises a convex portion, a bolt and a leg washer. The convex portion is inserted into a mounting hole (RH) of a vehicle roof panel and has a edge portion and a inner threaded hole. The bolt has a screw screwed to the threaded hole and is tightened to the convex portion. The leg washer has a plate washer ring, a leg portion and a taper portion. The leg portion is extendedly provided from the washer ring toward the mounting hole. The taper portion is provided on the leg portion as opposed to the edge portion and abutted on the edge portion to expand the tip portion toward an outside of the mounting hole.

### SUMMARY

To solve the aforementioned problems, the present invention provides: a roof panel fastening device for vehicle antennas, which is capable of robustly and stably fastening a vehicle antenna while preventing unfastening and loosening phenomena and maintaining watertightness when mounting the vehicle antenna to a roof panel; and a vehicle antenna apparatus having the same.

A roof panel fastening device for vehicle antennas according to an embodiment of the present invention includes: a conductive base provided, on a lower central portion thereof, with a protruding part, which passes through a vehicle roof panel and is disposed inside the vehicle roof panel and configured to support the vehicle antenna so that the vehicle antenna is placed and fixed on the outer surface of the vehicle roof panel; a stopper provided with hook parts which are formed from the outside toward the inside of the vehicle roof panel through stopper holes formed in the conductive base, wherein end portions of the hook parts each form a hook structure hooked to an inner surface of the vehicle roof panel and supports the conductive base so that the conductive base is not separated from the vehicle roof panel; a coupling member fitted and inserted into the protruding part of the conductive base and provided with triangular cylinder-shaped protruding parts protruding outward on both side surfaces thereof in one direction; and a mounting bracket which surrounds an outer side of the coupling member, includes a fastening hole in a central portion thereof, formed in a structure contacting the inner surface of the vehicle roof panel with an elastic force, and is coupled to the protruding part of the conductive base inside the vehicle roof panel together with the coupling member by a fastening means.

The conductive base includes cable holes which are provided for extracting an antenna power supply cable to the inside of the vehicle roof panel and are provided on a periphery of the protruding part so as to face each other.

The protruding part of the conductive base includes: a square body part disposed inside the vehicle roof panel; edge division parts respectively provided on edges of the body part so as to form a division parts for division into the cable holes and the stopper holes; and a protruding fastening part which is formed in a central portion of the square body part, is formed in a circular cylinder shape so as to firmly fix the coupling member and the mounting bracket for fixing the conductive base to the vehicle roof panel, is provided with a threaded portion in an inner circumferential surface thereof, and is formed to be integrally screw coupled by the fastening means in a state in which while the coupling member is inserted along an outer circumferential surface thereof, the mounting bracket is mounted while surrounding the coupling member.

The coupling member includes: a fastening hole on a central portion thereof so as to be fitted and inserted into the protruding part of the conductive base, triangular cylinder-shaped protruding parts protruding outward on both side surfaces facing each other in one direction; and rectangular recessed guide parts on both side surfaces facing each other in the other direction.

The mounting bracket may include: a first fastening hole in the bracket body so that the fastening means is inserted into the fastening hole; and contact parts each of which vertically extends on a side surface of the bracket body, and has an end portion bent outward and brought into contact with the inner surface of the vehicle roof panel while receiving an elastic force.

The contact parts of the mounting bracket may each further include a coupling guide member through which a portion of the triangular cylinder-shaped protruding part passes, triangular cylinder-shaped protruding part being provided on a side surface of the coupling member disposed inside the mounting bracket so that a force for fixing the conductive base to the vehicle roof panel may be maintained when the mounting bracket is screw coupled by the fastening means through the protruding fastening part which is a circular cylinder-shaped fixing member constituting the protruding part of the conductive base.

The mounting bracket may include guide bars each formed on the other side surface of the bracket body so as to vertically extend in a straight line on the side surface portion and to be in close contact with the recessed guide part provided on a side surface part of the coupling member.

The mounting bracket may include: a bracket body provided with a fastening hole formed in a center thereof; contact parts each of which vertically extends on a side surface of the bracket body, has an end portion bent outward and brought into contact with the inner surface of the vehicle roof panel while receiving an elastic force, and includes a coupling guide member through which a portion of the triangular cylinder-shaped protruding part provided on a side surface of the coupling part passes; and cable guides which cross the contact parts, are vertically formed on the other side surface of the bracket body, and guide an antenna power supply cable to the inside of the vehicle roof panel.

A vehicle antenna device according to an embodiment of the present invention includes: a cover formed in a streamlined shark fin shape; a base plate on which a periphery of a bottom surface of the cover is placed, and which forms a space, in which an antenna part is mounted, with the cover and forms a sealed structure; a conductive base fixedly coupled to the base plate by means of a screw; a roof panel fastening device which is fixedly coupled to the conductive base and fixedly couples a main body of the vehicle antenna to a vehicle roof panel; a rubber pad fixedly coupled to an upper peripheral portion of the base plate; and a sealing member attached and fixed to a peripheral edge of a through hole formed in a central portion of the base plate, wherein, the conductive base includes a protruding part which passes through the vehicle roof panel and is disposed inside the vehicle roof panel and is provided on a lower central portion the conductive base, and supports the vehicle antenna so as to be placed and fixed on an outer surface of the vehicle roof panel, the roof panel fastening device includes: a stopper including hook parts which are formed from the outside toward the inside of the vehicle roof panel through stopper holes formed in the conductive base, wherein an end portion of each hook part forms a hook structure hooked to an inner surface of the vehicle roof panel and supports the conductive base so that the conductive base is not separated from the vehicle roof panel; a coupling member fitted and inserted into the protruding part of the conductive base and including a triangular cylinder-shaped protruding parts protruding outward on both side surfaces thereof in one direction; and a mounting bracket which surrounds an outer side of the coupling member, includes a fastening hole in a central portion thereof, is formed in a structure contacting the inner surface of the vehicle roof panel with an elastic force, and is coupled to the protruding part of the conductive base inside the vehicle roof panel together with the coupling member by a fastening means.

The protruding part of the conductive base includes: a square body part disposed inside the vehicle roof panel; edge division parts respectively provided on edges of the body part so as to form a division parts for division into the cable holes and the stopper holes; and a protruding fastening part which is formed in a central portion of the square body part, is formed in a circular cylinder shape so as to firmly fix the coupling member and the mounting bracket for fixing the conductive base to the vehicle roof panel, is provided with a threaded
portion in an inner circumferential surface thereof, and s formed to be integrally screw coupled by the fastening means in a state in which while the coupling member is inserted along an outer circumferential surface thereof, the mounting bracket is mounted while surrounding the coupling member.

The coupling member includes: a fastening hole on a central portion thereof so as to be fitted and inserted into the protruding part of the conductive base, triangular cylinder-shaped protruding parts protruding outward on both side surfaces facing each other in one direction; and rectangular recessed guide parts on both side surfaces facing each other in the other direction, the mounting bracket may include: a fastening hole in a bracket body so that the fastening means is inserted into the fastening hole; contact parts each of which vertically extends on a side surface of the bracket body, and has an end portion bent outward and brought into contact with the inner surface of the vehicle roof panel while receiving an elastic force; and guide bars each formed on the other side surface of the bracket body so as to vertically extend in a straight line on the side surface portion and to be in close contact with the recessed guide part provided on a side surface part of the coupling member, and the contact parts of the mounting bracket each may include a coupling guide member through which a portion of the triangular cylinder-shaped protruding part passes, triangular cylinder-shaped protruding part being provided on a side surface of the coupling member disposed inside the mounting bracket so that a force for fixing the conductive base to the vehicle roof panel when the mounting bracket is screw coupled by the fastening means through the protruding fastening part which is a circular cylinder-shaped fixing member constituting the protruding part of the conductive base.

The antenna part may include a plurality of radiation elements covering multiple frequency bands (AM/FM band, DMB or DAB band, GPS band, etc.) and may be fixedly mounted by a screw or the like to be rested on both of the upper surface of the base plate and the upper surface of the conductive base fixedly coupled to the base plate; the base plate may have a shape similar to a sharp bottom peripheral shape of the cover so that the cover may be fixedly coupled thereto, include fastening holes provided on the upper surface thereof so that the antenna part and the conductive may be fixedly attached, have a central portion in which a circular penetration part is formed so that a lower side of the conductive base fixedly coupled to the base plate may penetrate the vehicle roof panel, and include a plurality of protruding parts which are provided on the upper surface in the vicinity of a portion at which the circular penetration part is formed, and into which a sealing member is fitted; the rubber pad may be fixedly coupled to an upper peripheral portion of the base plate, may be pressed by a sharp bottom surface formed on the periphery of the cover, and thus may form a watertight structure which prevents water penetration into the antenna part mounted inside a space part sealed by the base plate and the cover; and the sealing member may surround the vicinity of the periphery of the central penetration part of the base plate and thus may form a close watertight structure between the roof panel and the lower surface of the base plate.

As described above, the present invention has an effect of providing a roof panel fastening device for vehicle antennas and a vehicle antenna apparatus, in which when a vehicle antenna is attached to a roof panel, a fastening structure is not formed only by a simple screw coupling, but a repulsive force is additionally used by using elastic force, so that even in a long term use, while preventing unfastening and loosening phenomena, the vehicle antenna can be robustly and stably fastened with a simple structure.

### BRIEF DESCRIPTION OF THE DRAWINGS

Exemplary embodiments can be understood in more detail from the following description taken in conjunction with the accompanying drawings, in which:

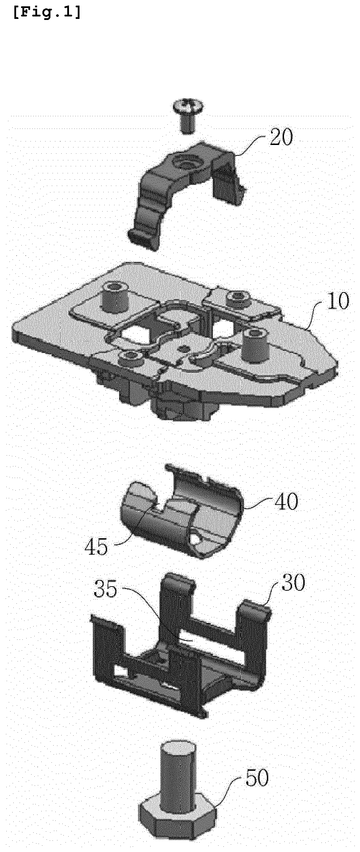

FIG. 1 is a view illustrating a roof fastening device for a vehicle shark fin antenna according to a related art;
FIG. 2 is an overall perspective view of a vehicle antenna device according to an embodiment of the present invention;
FIG. 3 is an exploded perspective view of a portion of components of a vehicle antenna device according to an embodiment of the present invention;
FIGS. 4 to 5 are exploded perspective views illustrating a roof panel fastening device for a vehicle antenna according to an embodiment of the present invention;
FIGS. 6 to 8 are schematic views illustrating a structure for fastening a vehicle antenna by means of a roof panel fastening device for according to an embodiment of the present invention; and
FIGS. 9 to 10 are views for describing a state in which a vehicle antenna is fastened to a roof panel fastening by means of a roof panel fastening device according to an embodiment of the present invention.

### DETAILED DESCRIPTION OF EMBODIMENTS

Description of the present invention is merely an exemplary embodiment for structural or functional description. Therefore, the scope of the present invention should not be construed as limited by the embodiments described in the text. That is, the embodiment may have various modifications and a variety of forms, and hence the scope of the invention should be understood to include equivalents for realizing the technical concept.

Meanwhile, the meanings of terms described in this application are to be understood as follows.

Terms such as "first", "second" are used to distinguish one element from the other, and the scope of the invention should not be limited by these terms. For example, a first component may be referred to as a second component. Likewise, the second component may also be referred to as the first component.

It should also be understood that when a component is referred to as being "'connected to" another component, it can be directly connected to another element, but an intervening component may also be present therebetween. In contrast, it will be understood that when a component is referred to as being "directly connected" to another component, another intervening component is not present therebetween. Meanwhile, other expressions used to describe the relationship between elements, such as "between", "directly-between", "adjacent to", and "directly adjacent to", should be interpreted similarly.

A singular expression should be understood to include plural forms as well unless the context clearly indicates otherwise. The meaning of 'include' or 'have' specifies the presence of a feature, a number, a step, an operation, a component, a part, or a combination thereof, but does not exclude in advance the presence or addition of other features, numbers, steps, operations, components, parts or a combinations thereof.

In each of the steps, identifiers (e.g. a, b, c) are used for convenience of description, and the identifiers do not describe the order of respective steps. Each of the steps may occur differently in the order stated, unless a specific order is described explicitly in the context. That is, each of the steps may take place as in the stated order, also be actually performed at the same time, and also be substantially performed in the opposite order.

Unless terms used in the present disclosure are defined differently, the terms may be construed as a meaning known to those skilled in the art. Such terms as those defined in a generally used dictionary are to be interpreted as consistent with the meaning in the context of the relevant art. Unless explicitly defined in the present invention, the terms cannot be interpreted as having an ideal or overly formal meaning.

Hereinafter, preferred embodiments of the present invention will be described with reference to the accompanying drawings.

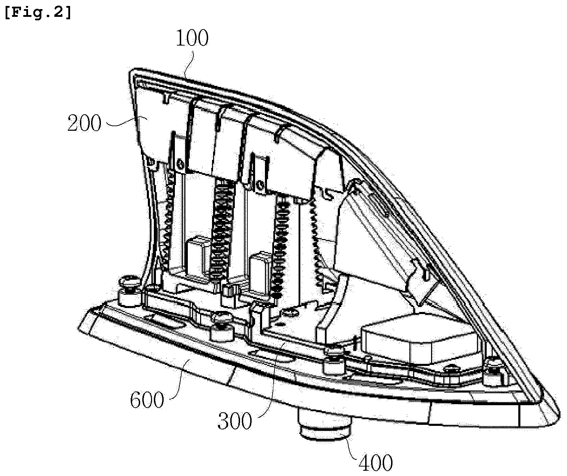

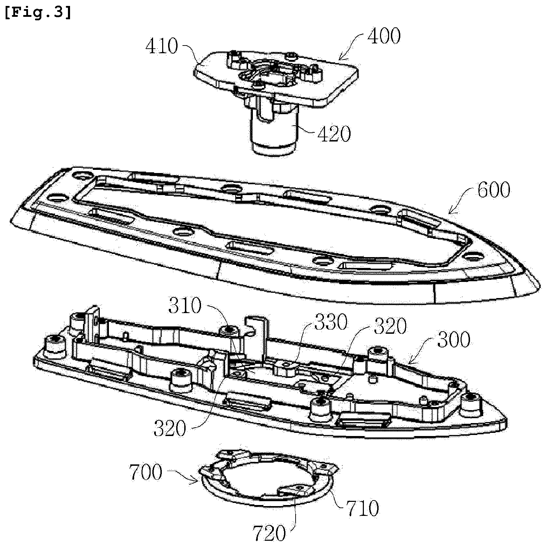

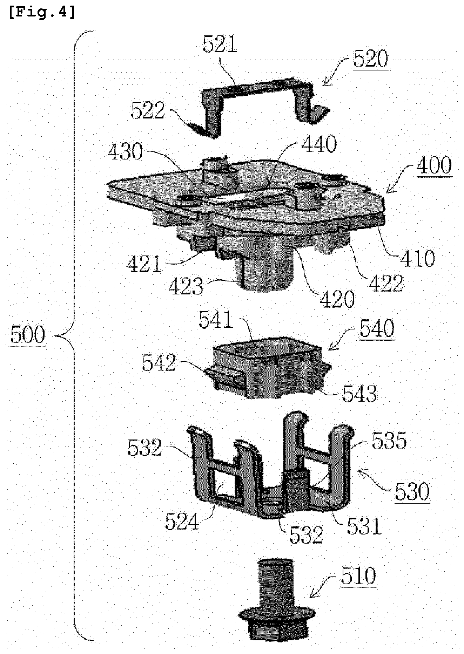

FIG. 2 is an overall perspective view of a vehicle antenna device according to an embodiment of the present invention, FIG. 3 is an exploded perspective view of a portion of components of a vehicle antenna device according to an embodiment of the present invention, and FIGS. 4 to 5 are exploded perspective views illustrating a roof panel fastening device for a vehicle antenna according to an embodiment of the present invention.

As shown in the drawings, a vehicle antenna according to an embodiment of the present invention is provided with: a cover 100; an antenna part 200; a plastic base plate 300 to which the cover is fixedly coupled and the antenna part 200 is fixedly mounted; a conductive base 400 fixedly coupled to the base plate 300 by a screw; a roof panel fastening device 500 fixedly coupled to the conductive base 400; a rubber pad 600 fixedly coupled to a peripheral upper portion of the base plate 300; and a sealing member 700 attached and coupled to the peripheral edge of a penetrated central portion of the base plate 300.

As illustrated in FIG. 2, the cover 100 has a streamline-like shark fin shape and is fixedly coupled to the outer periphery of the base plate 300 while shielding and covering the antenna mounted on the base plate.

The antenna part 200 is configured from a plurality of radiation elements covering multiple frequency bands (AM/FM band, DMB or DAB band, GPS band etc.) and is fixedly mounted to be rested on both of an upper surface of the base plate 300 and an upper surface of the conductive base 400 fixedly coupled to the base plate.

As illustrated FIGS. 2 to 3, the base plate 300 has a shape similar to a sharp peripheral shape of the bottom surface of the cover 100 so as to be fixedly coupled to the cover 100, the antenna part 200 is fixedly coupled to the base plate 300, and the conductive base 400 is fixedly attached to a fastening hole 330 provided in the upper surface of the base plate 300.

In addition, the base plate 300 has a circular penetration part 310 in the central portion thereof so that a lower portion of the conductive base 400 fixedly coupled to the base plate 300 penetrates a vehicle roof panel 1.

The base plate 300 is provided with a plurality of protruding parts 320 on the upper surface thereof in the vicinity of a portion at which the circular penetration part 310 is formed.

The conductive base 400 has a flat upper surface 410 on the upper side thereof so that the antenna part 200 is fixedly mounted, has a protruding part 420 provided therein with threads on the central lower side thereof so that the protruding part penetrates the vehicle roof panel 1 and is disposed inside the vehicle roof panel 1, and may support the vehicle antenna so that the vehicle antenna is placed and fixed on to an outer surface of the vehicle roof panel 1.

Meanwhile, the conductive base 400 is formed of a metal material in order to form a ground surface of the antenna part of the vehicle antenna according to an embodiment of the present invention. Thus, a ground signal may be applied through a power supply cable 2, and a high-frequency signal is applied to the antenna part 200 fixedly mounted on the base plate 300 and the conductive base 400 through the power supply cable 2.

At this point, the conductive base 400 may have cable holes 430 for extracting the antenna power supply cable 2 to the inside of the vehicle roof panel so that the cable holes face each other on the periphery of the protruding part 420.

The roof panel fastening device 500 is provided with: a fastening means 510 fastened to the protruding part 420 provided in the conductive base 400, so that the main body of the vehicle antenna may be mounted to be robustly fixed on to the outer surface of the vehicle roof panel 1.

The rubber pad 600 is a member which is fixedly coupled to a peripheral upper portion of the base plate 300, is pressed by a bottom surface formed by the periphery of the cover 100, and thereby forms a watertight structure which prevents water from penetrating into the antenna part 200 mounted inside a space portion sealed by the base plate 300 and the cover 100.

The sealing member 700 surrounds a peripheral portion of the central penetration part 310 of the base plate 300, forms a close watertight structure between the roof panel 1 and the lower surface of the base plate 300, and prevents water from penetrating through the circular penetration part 310 formed in the base plate 300.

In addition, in order to form a close watertight structure as described above, the sealing member 700 has a circular shape so as to surround the peripheral portion of the central penetration part 310 of the base plate 300, has a periphery part 710 having a constant diameter and thickness, and is provided with, on four positions on the periphery part, with attachment parts 720 each of which is bent outward from inside in a "C" shape and is provided with an insertion hole.

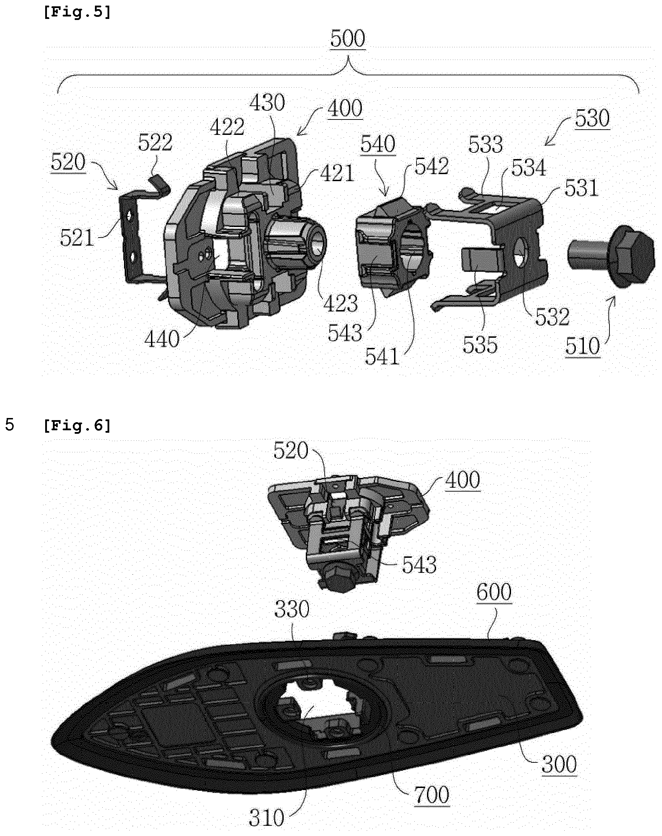

FIGS. 6 to 8 are schematic views illustrating a structure in which a vehicle antenna according to an embodiment of the present invention is fastened by a roof panel fastening device.

As shown in the drawings, it may be found that in order to fix the vehicle antenna according to an embodiment to a vehicle roof panel 1 by means of a roof panel fastening device 500, the protruding part 420 of the conductive base 400 penetrates into the penetration part 310 formed in the base plate 300 and is fixedly fastened inside the vehicle roof panel.

Here, the vehicle antenna may also be directly fixed and fastened to the vehicle roof panel 1 by means of the base plate 300, the conductive base 400, and the roof panel fastening device, but in the embodiment of the present invention, when the base plate 300 is placed on the outer surface of the vehicle roof panel 1, a rubber sealing member 700 is used for improving waterproof performance.

According to an embodiment of the present invention, the conductive base 400 is fixedly attached to the plastic base plate 300 contacting a certain portion of the vehicle roof panel 1, while forming a watertight structure by a rubber sealing member 700, and as shown in FIGS. 6 to 8, in the embodiment of the present invention, in the lower side of the base plate, a rubber sealing member 700 is provided between the vehicle roof panel 1 and the plastic base plate 300 contacting a certain portion of the vehicle roof panel 1 so as to prevent water penetration into the vehicle, and in the upper side of the base plate, when the cover 100 and the base plate 300 are coupled, a rubber pad 600 prevents water penetration into a space which is formed by the cover 100 and the base plate 300 and in which the antenna part 200 is attached and positioned.

Referring to FIG. 3, as illustrated in exploded perspective views of the roof panel fastening device in FIGS. 4 to 5, the roof panel fastening device 500 according to the present invention may be provided with: a fastening means 510, a stopper 520, a mounting bracket 530, and a coupling member 540.

The stopper 520 is provided with: screw holes 521 for screw coupling to the upper surface of the conductive base 400; and hook parts 522 which are formed from the outside toward the inside of the vehicle hood panel 1, through stopper holes 430 formed in the conductive base 400. The end portions of the hook parts 522 each form a hook structure hooked to the inner surface of the vehicle roof panel 1 and may support the conductive base 400 so that the conductive base is fixed while maintaining a temporary fastened state so as not be separated from the vehicle roof panel 1.

In addition, the mounting bracket 530 is formed in a structure to be coupled by a fastening means to the protruding part 420 of the conductive base 400 inside the vehicle roof panel 1, and may fix the conductive base 400 to the vehicle roof panel 1 while contacting the inner surface of the vehicle roof panel 1 with elastic force.

The coupling member 540 is an approximately rectangular casting, and has: a second fastening hole 541 in the central portion thereof so as to be fitted and inserted into the protruding part 420 of the conductive base 400; a triangular cylinder-shaped protruding part 542 on one pair of side surfaces thereof facing each other; and a recessed rectangle-shaped recess guide part 543 on the other pair side surfaces thereof facing each other.

Next, referring to FIGS. 4 to 5, a detailed configuration for fastening a vehicle antenna according to an embodiment of the present invention to a roof panel will be described as follows.

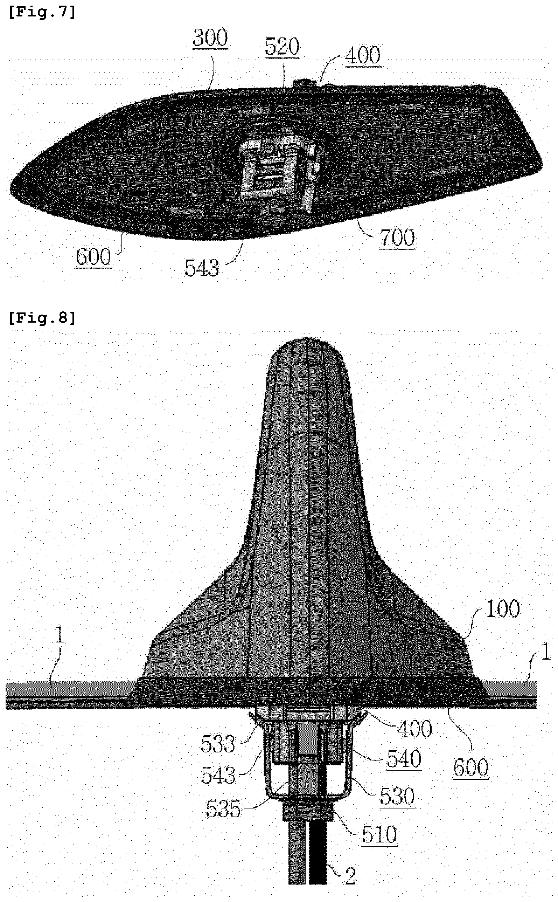

FIGS. 6 to 7 are schematic views illustrating a fastening structure for fastening a vehicle antenna by means of a roof panel fastening device according to an embodiment of the present invention, and FIGS. 8 to 10 are views for describing a state in which a vehicle antenna is fastened to a roof panel by means of a roof panel fastening device according to an embodiment of the present invention.

FIG. 6 illustrates a state in which the conductive base 400 is inserted into the vehicle roof panel 1 through the penetration part 310 formed in the base plate in the embodiment of the present invention, and FIG. 7 is view schematically illustrating a state in which the mounting bracket 530 is coupled to the conductive base 400 fixed by the stopper 520 inside the vehicle roof panel 1 in the embodiment of the present invention. FIGS. 6 and 7 are views schematically illustrating, in a state in which the roof panel 1 is removed, a state in which the roof panel fastening device 500 is fastened to the conductive base 400 which is fixedly attached to the base plate 300 by means of a tapping screw.

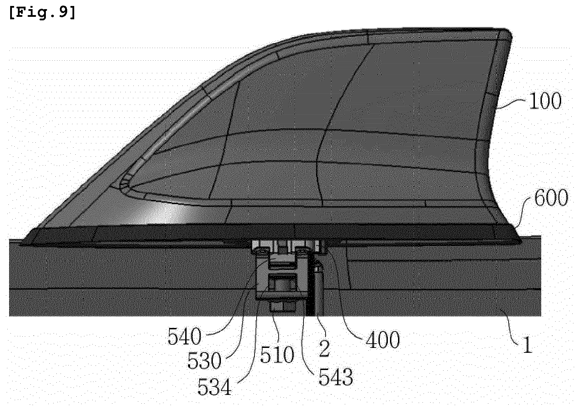

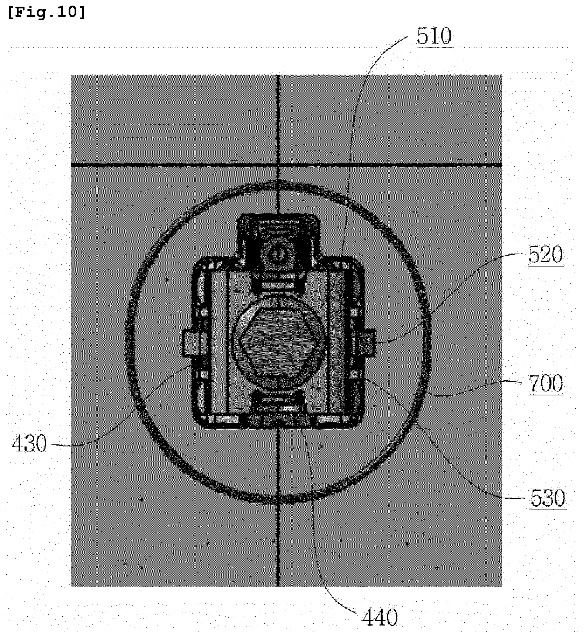

FIG. 8 is a rear view of a state in which the vehicle antenna is fastened to the roof panel by means of the roof panel fastening device according to an embodiment of the present invention, FIG. 9 is one side view of a state in which the vehicle antenna is fastened to the roof panel by means of the roof panel fastening device according to an embodiment of the present invention; and FIG. 10 is a bottom view of a state in which the vehicle antenna is fastened to the roof panel by means of the roof panel fastening device according to an embodiment of the present invention.

Here, Referring to FIGS. 3 to 7, in the mounting bracket 530 constituting the present invention, an end portion of an elastic contact part 532 may seem to directly contact the edge of the protruding part 420 of the conductive base 400, but according to the embodiment of the present invention, when a fastening means 510 which is to be described later and is for fixing the mounting bracket 530 is rotated so as to be screw coupled to the protruding part 420 of the conductive base 400, the end portion of the contact part 532 may uniformly contact with an elastic force on the inner surface of the vehicle roof panel 1 while the contact part 532 of the mounting bracket 530 is widened by an applied force.

In addition, as illustrated, according to the embodiment of the present invention, the protruding part 420 formed on the central portion of the conductive base 400 may be provided with a body part 421, edge division parts 422, and a protruding fastening part 423 which has a circular cylindrical shape and a threaded portion inside thereof.

In more detail, the body part 421 of the protruding part 420 may be disposed inside the vehicle roof panel 1 and formed in a square shape.

In addition, the edge division parts 422 may be respectively provided on the edges of the body part 431 so as to form the division parts for division into stopper holes 430 and a cable hole 440. Here, as illustrated in the drawings, it may be found that while the protruding part 420 of the conductive base 400 is disposed inside the vehicle roof panel 1, the stopper holes 430 and the cable hole 440 are defined, and when independently considering only the protruding part 420, a space for the hook part 522 of the stopper 520 and the power supply cable 2 may be formed by a cutout portion laterally formed in the body part 421.

As illustrated in FIGS. 8 to 9, the power supply cable 2 for supplying an antenna signal to the upper surface of the conductive base 400 is extracted through the cable hole 440 and supplies the signal to the antenna part 200 attached to the conductive base 400.

In addition, the protruding fastening part 423 of the protruding part 420 is provided on the central portion of the square body part 421 and is provided with a threaded portion in the inner circumferential surface of the cylindrical shape so as to robustly fix the mounting bracket 530 and the coupling member 540 for fixing the conductive base 400 to the vehicle roof panel 1. While the coupling member 540 is inserted along the outer circumferential surface of the cylindrical protruding fastening part 423 of the protruding part 420, the mounting bracket 530 is screw coupled integrally with the protruding fastening part 423 of the protruding part 420 by means of the fastening means 510 while surrounding the outer side of the coupling member 540 and mounting the coupling member thereinto.

Meanwhile, in the embodiment of the present invention, the conductive base 400, the mounting bracket 530, and the coupling member 540, which are shown in the drawings, fastened to the protruding fastening part 420 provided in the protruding part 420 of the conductive base 400 and integrally coupled by the fastening means 510.

Describing in more detail with reference to the drawings, the fastening means 510 is a fastening and fixing member to be screw coupled to the cylindrical protruding fastening part 423 described above.

In addition, the mounting bracket 530 has a first fastening hole 532 in a bracket body 531 so that the fastening means 510 can be inserted into the first fastening hole, and the mounting bracket may be provided with contact parts 533 which vertically extend on the side surfaces of the bracket body 531, and have end portions which are bent outward and contact the inner surface of the vehicle roof panel 1 while receiving elastic force.

The contact parts 533 may further be provided with a coupling guide member 534 through which a portion of the triangular cylinder-shaped protruding parts 542 provided on the side surfaces of the coupling member 540, which is disposed inside the mounting bracket 530, so that the force to fix the conductive base 400 to the vehicle roof panel 1 is maintained when the mounting bracket 530 is screw coupled by the fastening means 510 to the protruding fastening part 423 which is a cylindrical fixing member constituting the protruding part 420 of the conductive base 400.

Furthermore, the mounting bracket 530 is provided with guide bars 535 which cross the contact parts 533 and formed to vertically extend in a straight line on the other sides of the bracket body 531. The guide bars are brought into close contact with the guide parts 543, which are provided on the side surfaces of the coupling member 540 and formed to be recessed, and when the mounting bracket 530 and the coupling part 540 are fastened through the cylinder-shaped protruding fastening part 423 provided on the protruding part 420 of the conductive base 400, the guide bars prevent the rotation of the mounting bracket 530 caused by the rotation of the fastening means 510, and guide accurate positions of the members to be fastened to each other.

In addition, the coupling member 540 is provided with a second fastening hole 541 formed at a position corresponding to the first fastening hole 532, which is provided in the mounting bracket 530 so that the fastening means 510 can be inserted, and the coupling member is disposed inside the mounting bracket 530, so that the fastening means 510 can be screw coupled to the cylinder-shaped protruding fastening part 423 provided on the protruding part 420 of the conductive base 400.

In the roof panel fastening device for vehicle antenna according to the embodiment of the present invention, the protruding part 420 of the conductive base 400 described in detail with reference to FIGS. 5 and 6 is disposed from the outer side to the inner side of the vehicle roof panel 1, and the conductive base 400 may be firstly temporarily fastened to the vehicle roof panel 1 by means of the stopper 520 provided with the hook parts 522 and then fixed.

When the conductive base 400 attached to the base plate 300 is temporarily fixed to the vehicle roof panel 1 by means of the hook parts 522 of the stopper 520, the roof panel fastening device 500 is subsequently fastened and fixedly coupled, by means of the fastening bolt 510, to the protruding fastening part 422, which is provided in the protruding part 420 of the conductive base 400, while the coupling member 540 constituting the roof panel fastening device 500 is disposed inside the mounting bracket 530.

Here, the coupling member 540 is, while the outside thereof is surrounded by the mounting bracket 530, fastened to the protruding fastening part 422 of the conductive base 400 through the first fastening hole 532 provided in the central portion of the mounting bracket 530 by the rotation of the fastening means 510. Accordingly, while the contact parts 533 gradually contacts the inner surface of the vehicle roof panel 1 in the vertical direction and are widened along the inclined surface of a convex part 542 of the triangular cylinder provided on the side surface of the coupling member 540 in the horizontal direction, a repulsive force is applied to the contact parts 533. As the fastening means 510 are gradually rotated and the triangular cylinders provided on the side surfaces of the coupling member 540 are guided and inserted to the coupling guide holes 534 provided on the mounting bracket 530, the mounting bracket 530 and the coupling member 540 are fitted and coupled. At this point, while a portion of the side surface of the triangular cylinder-shaped protruding parts 542 provided on the side surfaces of the coupling member 540 passes through the coupling guide holes 534 formed on the contact parts 533 of the mounting bracket 530, the total force received by the mounting bracket 530 can be adjusted, and consequently, the fastening structure may be robustly and stably maintained.

In addition, as the fastening means 510 are gradually rotated with respect to the vehicle roof panel 1, and fastened to the protruding fastening part 422 of the conductive base 400, due to the mutual elastic force of the mounting bracket 530 and the coupling member 540, the components present outside the vehicle roof panel including the cover 100 and the base plate 300 receive a downward force and are brought into close contact with the outer roof surface of the roof panel, which is the roof of a vehicle, and the components present in the inside receive an upward force and are fastened to, brought into close contact with, and fixed to the inner surface of the vehicle in the direction toward the ceiling. Thus, a loosening phenomenon can be prevented.

As described above, the present invention has an effect of providing a roof panel fastening device for vehicle antennas, in which when a vehicle antenna is attached to a roof panel, a fastening structure is not formed only by a simple screw coupling, but a repulsive force is additionally used by using elastic force, so that even in a long term use, while preventing unfastening and loosening phenomena, the vehicle antenna can be robustly and stably fastened with a simple structure.

While the present invention has been described in detail, it will be clear that the above-described embodiments are merely exemplarily provided and do not limit the invention, and it will be understood that modifications of components of such a degree that can be equivalently replaced without departing from the scope of the invention as provided by the appended claims will fall within the scope of the present invention.

## Claims

1. A roof panel fastening device for a vehicle antenna, comprising:
a conductive base (400) provided, on a lower central portion thereof, with a protruding part(420), which is configured to pass through a vehicle roof panel and is disposed inside the vehicle roof panel, and configured to support the vehicle antenna so that the vehicle antenna is configured to be placed and fixed on the outer surface of the vehicle roof panel;
a stopper (520) provided with hook parts (522) which are configured to be formed from the outside toward the inside of the vehicle roof panel through stopper (520) holes formed in the conductive base (400), wherein end portions of the hook parts (522) each form a hook structure configured to be hooked to an inner surface of the vehicle roof panel and support the conductive base (400) so that the conductive base (400) is not separated from the vehicle roof panel;
a coupling member (540) fitted and inserted into the protruding part(420) of the conductive base (400) and provided with triangular cylinder-shaped protruding parts protruding outward on both side surfaces thereof in one direction; and
a mounting bracket (530) which surrounds an outer side of the coupling member (540), is provided with a fastening hole (532) in a central portion thereof, formed in a structure configured to be contacting the inner surface of the vehicle roof panel with an elastic force, and is coupled to the protruding part(420) of the conductive base (400) inside the vehicle roof panel together with the coupling member (540) by a fastening means;
wherein the conductive base (400) comprises cable holes which are provided for extracting an antenna power supply cable to the inside of the vehicle roof panel and are provided on a periphery of the protruding part (420) so as to face each other,
wherein the protruding part (420) of the conductive base (400) comprises:
a square body part (421) disposed inside the vehicle roof panel;
edge division parts (422) respectively provided on edges of the body part so as to form division parts for division into the cable holes and the stopper (520) holes; and
a protruding fastening part (423) which is formed in a central portion of the square body part (421), is formed in a circular cylinder shape so as to firmly fix the coupling member (540) and the mounting bracket (530)is configured for fixing the conductive base (400) to the vehicle roof panel, is provided with a threaded portion in an inner circumferential surface thereof, and is formed to be integrally screw coupled by the fastening means in a state in which while the coupling member (540) is inserted along an outer circumferential surface thereof, the mounting bracket (530) is mounted while surrounding the coupling member (540), and
wherein the coupling member (540) comprises:
a fastening hole (532) on a central portion thereof so as to be fitted and inserted into the protruding part (420) of the conductive base (400), triangular cylinder-shaped protruding parts protruding outward on both side surfaces facing each other in one direction; and
rectangular recessed guide parts (543) on both side surfaces facing each other in another direction.

2. The roof panel fastening device of claim 1, wherein the mounting bracket (530) comprises: a first fastening hole (532) in the bracket body so that the fastening means is inserted into the fastening hole (532); and contact parts (533) each of which vertically extends on a side surface of the bracket body, and has an end portion bent outward and being configured to be brought into contact with the inner surface of the vehicle roof panel while receiving an elastic force.

3. The roof panel fastening device of claim 2, wherein the contact parts (533) of the mounting bracket (530) each further comprises a coupling guide member through which a portion of the triangular cylinder-shaped protruding part(420) passes, triangular cylinder-shaped protruding part(542) being provided on a side surface of the coupling member (540) disposed inside the mounting bracket (530) so that a force for fixing the conductive base (400) to the vehicle roof panel is maintained when the mounting bracket (530) is screw coupled by the fastening means through the protruding fastening part (423) which is a circular cylinder-shaped fixing member constituting the protruding part(420) of the conductive base (400).

4. The roof panel fastening device of claim 3, wherein the mounting bracket (530) comprises guide bars each formed on the other side surface of the bracket body so as to vertically extend in a straight line on the side surface portion and to be in close contact with the recessed guide part (542) provided on a side surface part of the coupling member (540).

5. The roof panel fastening device of claim 1, wherein the mounting bracket (530) comprises:
a bracket body comprising a fastening hole (532) formed in a center thereof;
contact parts (533) each of which vertically extends on a side surface of the bracket body, has an end portion bent outward being configured to being brought into contact with the inner surface of the vehicle roof panel while receiving an elastic force, and comprises a coupling guide member through which a portion of the triangular cylinder-shaped protruding part(420) provided on a side surface of the coupling part passes; and
cable guides which cross the contact parts (533), are vertically formed on the other side surface of the bracket body, and which are configured to guide an antenna power supply cable to the inside of the vehicle roof panel.

6. A vehicle antenna device comprising:
a roof panel fastening device according to claim 1;
a cover (100) formed in a streamlined shark fin shape;
a base plate (300) on which a periphery of a bottom surface of the cover (100) is placed, and which forms a space, in which an antenna part is mounted, with the cover (100) and forms a sealed structure;
wherein the conductive base (400) is fixedly coupled to the base plate (300) by means of a screw;
wherein the roof panel fastening device is fixedly coupled to the conductive base and is configured to fixedly couple a main body of the vehicle antenna to a vehicle roof panel;
a rubber pad (600) fixedly coupled to an upper peripheral portion of the base plate (300); and
a sealing member attached and fixed to a peripheral edge of a through hole formed in a central portion of the base plate (300).

7. The vehicle antenna device of claim 6, wherein coupling member (540)the mounting bracket (530) comprises:
a fastening hole (532) in a bracket body (531) so that the fastening means is inserted into the fastening hole (532);
contact parts (533) each of which vertically extends on a side surface of the bracket body, and has an end portion bent outward and is configured to be brought into contact with the inner surface of the vehicle roof panel while receiving an elastic force; and
guide bars each formed on the other side surface of the bracket body so as to vertically extend in a straight line on the side surface portion and to be in close contact with the recessed guide part (542) provided on a side surface part of the coupling member (540), and the contact parts (533) of the mounting bracket (530) each comprise a coupling guide member through which a portion of the triangular cylinder-shaped protruding part(420) passes, triangular cylinder-shaped protruding part(420) being provided on a side surface of the coupling member (540) disposed inside the mounting bracket (530) so that a force for fixing the conductive base (400) to the vehicle roof panel when the mounting bracket (530) is screw coupled by the fastening means through the protruding fastening part (423) which is a circular cylinder-shaped fixing member constituting the protruding part(420) of the conductive base (400) .

8. The vehicle antenna device of any one of claims 6 or 7, wherein:
the antenna part comprises a plurality of radiation elements covering multiple frequency bands and is fixedly mounted by a screw or the like to be rested on both of the upper surface of the base plate (300) and the upper surface of the conductive base (400) fixedly coupled to the base plate (300);
the base plate (300) has a shape similar to a sharp bottom peripheral shape of the cover (100) so that the cover (100) is fixedly coupled thereto, comprises fastening holes provided on the upper surface thereof so that the antenna part and the conductive are fixedly attached, has a central portion in which a circular penetration part is formed so that a lower side of the conductive base (400) fixedly coupled to the base plate (300) penetrates the vehicle roof panel, and comprises a plurality of protruding parts which are provided on the upper surface in the vicinity of a portion at which the circular penetration part is formed, and into which a sealing member is fitted;
the rubber pad (600) is fixedly coupled to an upper peripheral portion of the base plate (300), is pressed by a sharp bottom surface formed on the periphery of the cover (100), and thus forms a watertight structure which prevents water penetration into the antenna part mounted inside a space part sealed by the base plate (300) and the cover (100); and the sealing member surrounds the vicinity of the periphery of the central penetration part of the base plate (300) and thus forms a close watertight structure between the roof panel and the lower surface of the base plate (300).

## Patentansprüche

1. Dachpaneel-Befestigungsvorrichtung für eine Fahrzeugantenne, umfassend:
eine leitende Basis (400), die an einem unteren mittleren Abschnitt davon mit einem vorstehenden Teil (420) versehen ist, der konfiguriert ist, um durch ein Fahrzeugdachpaneel zu verlaufen und der innerhalb des Fahrzeugdachpaneels angeordnet und konfiguriert ist, um die Fahrzeugantenne zu tragen, so dass die Fahrzeugantenne dazu konfiguriert ist, an der Außenfläche des Fahrzeugdachpaneels platziert und befestigt zu werden;
einen Stopper (520), der mit Hakenteilen (522) versehen ist, die konfiguriert sind, um von der Außenseite zur Innenseite des Fahrzeugdachpaneels durch Stopper (520) Löcher, die in der leitenden Basis (400) ausgebildet sind, gebildet zu werden, wobei Endabschnitte der Hakenteile (522) jeweils eine Hakenstruktur bilden, die konfiguriert ist, um an einer Innenfläche der Fahrzeugdachplatte eingehakt zu werden und die leitende Basis (400) zu stützen, so dass die leitende Basis (400) nicht von der Fahrzeugdachplatte getrennt wird;
ein Kopplungselement (540), das in den vorstehenden Teil (420) der leitenden Basis (400) eingepasst und eingesetzt ist und mit dreieckigen zylinderförmigen vorstehenden Teilen, die an beiden Seitenflächen davon in einer Richtung nach außen vorstehen, versehen ist; und
eine Montagehalterung (530), die eine Außenseite des Kopplungselements (540) umgibt, mit einem Befestigungsloch (532) in einem mittleren Abschnitt davon, das in einer Struktur ausgebildet ist, versehen ist, die so konfiguriert ist, dass sie die Innenfläche des Fahrzeugdachpaneels mit einer elastischen Kraft berührt und mit dem hervorstehenden Teil (420) der leitenden Basis (400) innerhalb des Fahrzeugdachpaneels zusammen mit dem Kopplungselement (540) durch ein Befestigungsmittel gekoppelt ist;
wobei die leitende Basis (400) Kabellöcher umfasst, die zum Herausziehen eines Antennenstromversorgungskabels in das Innere der Fahrzeugdachplatte bereitgestellt sind und an einem Umfang des vorstehenden Teils (420) bereitgestellt sind, um einander zugewandt zu sein,
wobei der vorstehende Teil (420) der leitenden Basis (400) umfasst:
ein quadratisches Körperteil (421), das innerhalb der Fahrzeugdachplatte angeordnet ist;
Kantenunterteilungsteile (422), die jeweils an Kanten des Körperteils vorgesehen sind, um Unterteilungsteile zur Unterteilung in die Kabellöcher und die Löcher des Stoppers (520) zu bilden; und
einen vorstehender Befestigungsteil (423), der in einem mittleren Abschnitt des quadratischen Körperteils (421) gebildet ist, in einer Kreiszylinderform gebildet ist, um das Kupplungselement (540) fest zu fixieren, und die Montagehalterung (530), die zum Befestigen der leitenden Basis (400) an der Fahrzeugdachplatte konfiguriert ist, mit einem Gewindeabschnitt in einer Innenumfangsfläche davon versehen und ausgebildet ist, um durch die Befestigungsmittel in einem Zustand, in dem das Kupplungselement (540) entlang einer Außenumfangsfläche davon eingeführt ist, einstückig durch Schrauben verbunden zu werden, wobei die Montagehalterung (530) montiert ist, während sie das Kupplungselement (540) umgibt, und
wobei das Kopplungselement (540) umfasst:
ein Befestigungsloch (532) an einem mittleren Abschnitt davon, um in den vorstehenden Teil (420) der leitenden Basis (400) eingepasst und eingesetzt zu werden, wobei dreieckige zylinderförmige vorstehende Teile, die an beiden Seitenflächen, die sich in einer Richtung zugewandt sind, nach außen ragen; und
rechteckige ausgesparte Führungsteile (543) an beiden Seitenflächen, die einander in einer anderen Richtung zugewandt sind.

2. Dachpaneel-Befestigungsvorrichtung nach Anspruch 1, wobei die Montagehalterung (530) umfasst:
ein erstes Befestigungsloch (532) in dem Halterungskörper, so dass das Befestigungsmittel in das Befestigungsloch (532) eingeführt wird; und
Kontaktteile (533), von denen sich jeder vertikal auf einer Seitenfläche des Halterungskörpers erstreckt und einen nach außen gebogenen Endabschnitt aufweist und konfiguriert ist, um mit der Innenfläche des Fahrzeugdachblechs in Kontakt gebracht zu werden, während eine elastische Kraft aufgenommen wird.

3. Dachpaneel-Befestigungsvorrichtung nach Anspruch 2, wobei die Kontaktteile (533) der Montagehalterung (530) jeweils ferner umfasst: ein Kupplungsführungselement, durch welches ein Abschnitt des dreieckig zylinderförmigen vorstehenden Teils (420) hindurchgeht, einen dreieckigen zylinderförmigen vorstehenden Teil (542), der an einer Seitenfläche des Kopplungselements (540), das innerhalb der Montagehalterung (530) angeordnet ist, vorgesehen ist, so dass eine Kraft zum Befestigen der leitenden Basis (400) an der Fahrzeugdachplatte aufrechterhalten wird, wenn die Montagehalterung (530) durch das Befestigungsmittel durch den vorstehenden Befestigungsteil (423), der ein kreiszylinderförmiges Befestigungselement ist, das den vorstehenden Teil (420) der leitenden Basis (400) bildet, schraubengekoppelt ist.

4. Dachpaneel-Befestigungsvorrichtung nach Anspruch 3, wobei die Montagehalterung (530) Führungsstangen umfasst, die jeweils an der anderen Seitenfläche des Halterungskörpers so ausgebildet sind, dass sie sich vertikal in einer geraden Linie auf dem Seitenflächenabschnitt erstrecken und einwärts in engem Kontakt mit dem vertieften Führungsteil (542), das an einem Seitenflächenteil des Kupplungselements (540) vorgesehen ist, verlaufen.

5. Dachpaneel-Befestigungsvorrichtung nach Anspruch 1, wobei die Montagehalterung (530) umfasst:
einen Halterungskörper mit einem Befestigungsloch (532), das in einer Mitte davon ausgebildet ist;
Kontaktteile (533), von denen sich jeder vertikal auf einer Seitenfläche des Halterungskörpers erstreckt, einen nach außen gebogenen Endabschnitt aufweisen, der konfiguriert ist, um mit der Innenfläche des Fahrzeugdachblechs in Kontakt gebracht zu werden, während eine elastische Kraft aufgenommen wird, und ein Kupplungsführungselement umfasst, durch das ein Abschnitt des dreieckigen zylinderförmigen vorstehenden Teils (420), der an einer Seitenfläche des Kupplungsteils vorgesehen ist, verläuft; und
Kabelführungen, die die Kontaktteile (533) kreuzen, vertikal an der anderen Seitenfläche des Halterungskörpers ausgebildet und konfiguriert sind, um ein Antennenstromversorgungskabel zum Inneren der Fahrzeugdachplatte zu führen.

6. Fahrzeugantennenvorrichtung, umfassend:
eine Dachpaneel-Befestigungsvorrichtung nach Anspruch 1;
eine Abdeckung (100), die in einer stromlinienförmigen Haifischflossenform ausgebildet ist;
eine Basisplatte (300), auf der ein Umfang einer unteren Fläche der Abdeckung (100) platziert ist und die mit der Abdeckung (100) einen Raum bildet, in dem ein Antennenteil montiert ist, und eine abgedichtete Struktur bildet;
wobei die leitende Basis (400) mittels einer Schraube fest mit der Basisplatte (300) verbunden ist;
wobei die Dachpaneel-Befestigungsvorrichtung fest mit der leitenden Basis gekoppelt und konfiguriert ist, um einen Hauptkörper der Fahrzeugantenne fest mit einem Fahrzeugdachpaneel zu koppeln;
ein Gummikissen (600), das fest mit einem oberen Umfangsabschnitt der Basisplatte (300) verbunden ist; und
ein Dichtungselement, das an einem Umfangsrand eines Durchgangslochs, das in einem mittleren Abschnitt der Basisplatte (300) ausgebildet ist, angebracht und befestigt ist.

7. Fahrzeugantennenvorrichtung nach Anspruch 6, wobei das Kopplungselement (540) die Montagehalterung (530) umfasst:
ein Befestigungsloch (532) in einem Halterungskörper (531), so dass das Befestigungsmittel in das Befestigungsloch (532) eingeführt wird;
Kontaktteile (533), von denen sich jeder vertikal auf einer Seitenfläche des Halterungskörpers erstreckt und einen nach außen gebogenen Endabschnitt aufweist und konfiguriert ist, um mit der Innenfläche des Fahrzeugdachblechs in Kontakt gebracht zu werden, während eine elastische Kraft aufgenommen wird; und
Führungsstangen, die jeweils an der anderen Seitenfläche des Halterungskörpers so ausgebildet sind, dass sie sich vertikal in einer geraden Linie auf dem Seitenflächenabschnitt erstrecken und in engem Kontakt mit dem vertieften Führungsteil (542), der an einem Seitenflächenteil des Kupplungselements (540) vorgesehen ist, stehen und die Kontaktteile (533) der Montagehalterung (530) jeweils ein Kupplungsführungselement, durch das ein Abschnitt des dreieckig zylinderförmigen hervorstehenden Teils (420) hindurchgeht, umfassen, wobei einen dreieckigen zylinderförmigen vorstehenden Teil (420), der an einer Seitenfläche des Kopplungselements (540), das innerhalb der Montagehalterung (530) angeordnet ist, vorgesehen ist, so dass eine Kraft zum Befestigen der leitenden Basis (400) an der Fahrzeugdachplatte bei der Montage die Halterung (530) durch das Befestigungsmittel durch den vorstehenden Befestigungsteil (423), der ein kreiszylinderförmiges Befestigungselement ist, das den vorstehenden Teil (420) der leitenden Basis (400) bildet, geschraubt wird.

8. Fahrzeugantennenvorrichtung nach einem der Ansprüche 6 oder 7, wobei:
der Antennenteil eine Vielzahl von Strahlungselementen umfasst, die mehrere Frequenzbänder abdecken und durch eine Schraube oder dergleichen fest angebracht ist, um sowohl auf der oberen Fläche der Grundplatte (300) als auch auf der oberen Fläche der leitenden Basis (400), die fest mit der Grundplatte (300) verbunden ist, aufgesetzt zu werden;
die Basisplatte (300), die eine Form aufweist, die einer scharfen unteren Umfangsform der Abdeckung (100) ähnlich ist, so dass die Abdeckung (100) fest damit verbunden ist, Befestigungslöcher umfasst, die an ihrer oberen Oberfläche vorgesehen sind, so dass der Antennenteil und die leitende Basis befestigt sind, einen mittleren Abschnitt aufweist, in dem ein kreisförmiger Durchdringungsteil gebildet ist, so dass eine Unterseite der leitenden Basis (400), die fest mit der Basisplatte (300) verbunden ist, die Fahrzeugdachplatte durchdringt, und eine Vielzahl von vorstehenden Teile umfasst, die auf der oberen Fläche in der Nähe eines Abschnitts, an dem der kreisförmige Durchdringungsteil ausgebildet ist, vorgesehen sind und in die ein Dichtungselement eingepasst ist;
das Gummipolster (600) fest mit einem oberen Umfangsabschnitt der Grundplatte (300) verbunden ist, durch eine am Umfang der Abdeckung (100) gebildete scharfe Bodenfläche gedrückt wird und somit eine wasserdichte Struktur, die das Eindringen von Wasser verhindert, bildet, wobei der Antennenteil innerhalb eines Raumteils, der durch die Basisplatte (300) und die Abdeckung (100) abgedichtet ist, montiert ist; und
das Dichtungselement die Umgebung des Umfangs des zentralen Durchdringungsteils der Grundplatte (300) umgibt und somit eine dichte wasserdichte Struktur zwischen der Dachplatte und der unteren Fläche der Grundplatte (300) bildet.

## Revendications

1. Un dispositif de fixation de panneau de toit pour une antenne de véhicule, comprenant :
une base conductrice (400) fournie, sur une section centrale inférieure de celle-ci, avec une partie saillante (420), qui est configurée pour passer au travers d'un panneau de toit de véhicule et est disposée à l'intérieur du panneau du toit du véhicule et configurée pour supporter l'antenne du véhicule de sorte que l'antenne de véhicule est configurée pour être placée et fixée sur la surface extérieure du panneau de toit du véhicule ;
un butoir (520) muni de pièces à crochet (522) qui sont configurées pour être formées de l'extérieur vers l'intérieur du panneau de toit du véhicule au travers de trous de butée (520) formés dans la base conductrice (400), où les sections d'extrémité des pièces à crochet (522) forment chacune une structure de crochet configurée pour être accrochée à une surface intérieure du panneau de toit du véhicule et supporter la base conductrice (400), de sorte que la base conductrice (400) ne soit pas séparée du panneau de toit du véhicule ;
un élément de couplage (540) ajusté et inséré dans la section saillante (420) de la base conductrice (400) et pourvu de parties saillantes triangulaires en forme de cylindre faisant saillie vers l'extérieur sur les deux surfaces latérales de celui-ci dans une direction ; et
un support de montage (530) qui entoure un côté extérieur de l'élément de couplage (540), est pourvu d'un trou de fixation (532) dans une section centrale de celui-ci, formé dans une structure configurée pour être en contact avec la surface intérieure du panneau de toit du véhicule avec une force élastique et est accouplé à la section saillante (420) de la base conductrice (400) à l'intérieur du panneau de toit du véhicule conjointement avec l'élément de couplage (540) par un moyen de fixation ;
où la base conductrice (400) Z p comprend des trous de câble qui sont prévus pour extraire un câble d'alimentation d'antenne vers l'intérieur du panneau de toit du véhicule et ces trous sont fournis sur une périphérie de la section saillante (420) de manière à se faire face,
où la section saillante (420) de la base conductrice (400) comprend :
une partie de corps carré (421) disposée à l'intérieur du panneau de toit du véhicule ;
des parties de division de bord (422) respectivement fournies sur les bords de la partie du corps, de manière à former des parties de division pour la division dans les trous de câble et les trous de butoir (520) ; et
une section de fixation saillante (423), qui est formée dans une section centrale de la partie de corps carrée (421), a une forme de cylindre circulaire de façon à fixer fermement l'élément de couplage (540) et le support de montage (530) est configuré pour fixer la base conductrice (400) au panneau de toit du véhicule ; elle est pourvue d'une section filetée dans une surface circonférentielle intérieure de celui-ci et est formée pour être intégralement vissée par les moyens de fixation dans un état dans lequel, tandis que l'élément de couplage (540) est inséré le long d'une surface circonférentielle extérieure de celui-ci, le support de montage (530) est monté tout en entourant l'élément de couplage (540) et
dans lequel l'élément de couplage (540) comprend :
un trou de fixation (532) sur une section centrale de celui-ci de manière à être ajusté et inséré dans la section saillante (420) de la base conductrice (400), des pièces saillantes triangulaires en forme de cylindre faisant saillie vers l'extérieur sur les deux surfaces latérales se faisant face dans une direction ; et
des pièces de guidage rectangulaires encastrées (543) sur les deux surfaces latérales
se faisant face dans une autre direction.

2. Le dispositif de fixation du panneau de toit selon la revendication 1, où le support de montage (530) comprend : un premier trou de fixation (532) dans le corps du support, de sorte que le moyen de fixation est inséré dans le trou de fixation (532) ; et des pièces de contact (533), chacune s'étendant verticalement sur une surface latérale du corps du support et a une section d'extrémité pliée vers l'extérieur et configurée pour être amenée en contact avec la surface interne du panneau de toit du véhicule tout en recevant une force élastique.

3. Le dispositif de fixation du panneau de toit selon la revendication 2, où les parties de contact (533) du support de montage (530) comprennent chacune en outre un élément de guidage du couplage au travers duquel passe une section de la partie saillante(420) triangulaire en forme de cylindre, la partie saillante triangulaire en forme de cylindre (542) étant prévue sur une surface latérale de l'élément de couplage (540) disposé à l'intérieur du support de montage (530), de façon qu'une force pour fixer la base conductrice (400) au panneau de toit du véhicule est maintenue lorsque le support de montage (530) est vissé par les moyens de fixation au travers de la section de fixation saillante (423) qui est un élément de fixation en forme de cylindre circulaire constituant la section saillante (420) de la base conductrice (400).

4. Le dispositif de fixation du panneau de toit selon la revendication 3, où le support de montage (530) comprend des barres de guidage formées chacune sur l'autre surface latérale du corps de support, de manière à s'étendre verticalement en ligne droite sur la section de surface latérale et à être en contact étroit avec la section de guidage encastrée (542) fournie sur une section de surface latérale de l'élément de couplage (540).

5. Le dispositif de fixation de panneau de toit selon la revendication 1, où le support de montage (530) comprend :
un corps de support comprenant un trou de fixation (532) formé au centre de celui-ci ;
des pièces de contact (533) dont chacune s'étend verticalement sur une surface latérale du corps de support, a une section d'extrémité pliée vers l'extérieur configurée pour être mise en contact avec la surface intérieure du panneau de toit du véhicule tout en recevant une force élastique et comprend un élément de guidage du couplage au travers duquel passe une partie de la section saillante triangulaire en forme de cylindre (420) prévue sur une surface latérale de la pièce de couplage ; et
des guides de câble qui croisent les parties de contact (533), sont formés verticalement sur l'autre surface latérale du corps de support et qui sont configurés pour guider un câble d'alimentation d'antenne vers l'intérieur du panneau de toit du véhicule.

6. Un dispositif d'antenne de véhicule comprenant :
un dispositif de fixation du panneau de toit selon la revendication 1 ;
un couvercle (100) formé en forme d'aileron de requin profilé ;
une plaque de base (300) sur laquelle une périphérie d'une surface inférieure du couvercle (100) est placée et qui forme un espace dans lequel une section d'antenne est montée avec le couvercle (100) et forme une structure étanche ;
où la base conductrice (400) est couplée de manière fixe à la plaque de base (300) au moyen d'une vis ;
où le dispositif de fixation du panneau de toit est couplé de manière fixe à la base conductrice et est configuré pour coupler de manière fixe un corps principal de l'antenne du véhicule à un panneau de toit de véhicule ;
un tampon en caoutchouc (600) couplé de manière fixe à une section périphérique supérieure de la plaque de base (300) ; et
un élément d'étanchéité attaché et fixé à un bord périphérique d'un trou traversant formé dans une section centrale de la plaque de base (300).

7. Le dispositif d'antenne de véhicule selon la revendication 6, où l'élément de couplage (540) du support de montage (530) comprend :
un trou de fixation (532) dans un corps de support (531) de façon que le moyen de fixation est inséré dans le trou de fixation (532) ;
des pièces de contact (533) dont chacune s'étend verticalement sur une surface latérale du corps de support et a une section d'extrémité pliée vers l'extérieur et est configurée pour être mise en contact avec la surface intérieure du panneau de toit du véhicule tout en recevant une force élastique ; et
des barres de guidage formées chacune sur l'autre surface latérale du corps de support de manière à s'étendre verticalement en ligne droite sur la section de surface latérale et à être en contact étroit avec la section de guidage encastrée (542) prévue sur une section de surface latérale de l'élément de couplage (540) et les parties de contact (533) du support de montage (530) comprennent chacune un élément de guidage du couplage au travers duquel passe une partie de la section saillante triangulaire en forme de cylindre (420), la section saillante triangulaire en forme de cylindre (420) étant prévue sur une surface latérale de l'élément de couplage (540) disposé à l'intérieur du support de montage (530), de façon qu'une force pour fixer la base conductrice (400) au panneau de toit du véhicule lorsque le support de montage (530) est vissé par le moyen de fixation au travers de la section de fixation saillante (423) qui est un élément de fixation en forme de cylindre circulaire constituant la section saillante (420) de la base conductrice (400).

8. Le dispositif d'antenne de véhicule de l'une quelconque des revendications 6 ou 7, dans lequel :
la section antenne comprend une pluralité d'éléments de rayonnement couvrant de multiples bandes de fréquence et est montée de manière fixe par une vis ou élément similaire pour reposer à la fois sur la surface supérieure de la plaque de base (300) et sur la surface supérieure de la base conductrice (400) couplée de manière fixe à la plaque de base (300) ;
la plaque de base (300) a une forme similaire à une forme périphérique inférieure nette du couvercle (100), de façon que le couvercle (100) est couplé de manière fixe à celle-ci, elle comprend des trous de fixation prévus sur sa surface supérieure de sorte que la section antenne et le conducteur sont attachés de manière fixe, elle a une section centrale dans laquelle une section de pénétration circulaire est formée, de façon qu'un côté inférieur de la base conductrice (400) couplée de manière fixe à la plaque de base (300) pénètre dans le panneau de toit du véhicule et comprend une pluralité de parties saillantes qui sont prévues sur la surface supérieure à proximité d'une section dans laquelle la section de pénétration circulaire est formée et dans laquelle un élément d'étanchéité est ajusté ;
le tampon en caoutchouc (600) est couplé de manière fixe à une section périphérique supérieure de la plaque de base (300), il est pressé par une surface inférieure nette formée sur la périphérie du couvercle (100) et forme ainsi une structure étanche à l'eau qui empêche la pénétration de l'eau dans la partie de l'antenne montée à l'intérieur de l'espace scellé par la plaque de base (300) et le couvercle (100) ; et l'élément d'étanchéité entoure le voisinage de la périphérie de la section de pénétration centrale de la plaque de base (300) pour former ainsi une structure étanche à l'eau bien fermée entre le panneau de toit et la surface inférieure de la plaque de base (300).
